(19) Europäisches Patentamt

European Patent Office

Office européen des brevets

(11) **EP 4 691 604 A2**

(12) **EUROPEAN PATENT APPLICATION**

(43) Date of publication:
**11.02.2026 Bulletin 2026/07**

(21) Application number: 25193369.3

(22) Date of filing: **01.08.2025**

(51) International Patent Classification (IPC):
*B01D 53/56* (2006.01)

(52) Cooperative Patent Classification (CPC):
**B01D 53/346; B01D 53/62; B01D 53/8621;**
**B01D 53/8696;** B01D 53/56; B01D 53/78;
B01D 2251/2062; B01D 2257/404; B01D 2257/504;
B01D 2258/0283

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **06.08.2024 JP 2024129734**

(71) Applicants:
• **KABUSHIKI KAISHA TOSHIBA**
**Kawasaki-shi, Kanagawa (JP)**

• **Toshiba Energy Systems & Solutions**
**Corporation**
**Saiwai-ku**
**Kawasaki-shi**
**Kanagawa (JP)**

(72) Inventor: **NAKAMURA, Kotaro**
**Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **REACTOR CONTROL SYSTEM**

(57) To provide a reactor control system capable of achieving an efficient operation of a reactor. In a reactor control system in an embodiment, an inverse analysis part finds, as medium performance distribution data, a medium performance distribution in which performance of a medium changes in a flow direction in which a reactant introduction fluid and an adsorption substance introduction fluid pass through the medium by executing an inverse analysis regarding reactant introduction fluid measurement data, adsorption substance introduction fluid measurement data, and discharge fluid measurement data. A control part executes output of a control signal based on the medium performance distribution data.

**EP 4 691 604 A2**

# EP 4 691 604 A2

**Description**

FIELD

Embodiments of the present invention relate to a reactor control system.

BACKGROUND

A reactor is a device which produces a product by reaction of a reactant. The reactor is used for the execution of, for example, $CO_2$ separation and recovery (CCS: Carbon Capture and Storage), direct air recovery (DAC: Direct Air Capture), chemical heat storage, water electrolysis (SOEC), chemical loop combustion, exhaust gas treatment, and so on.

For example, when executing denitrification processing on an exhaust gas containing NOx or the like, $NH_3$ or the like being an adsorption substance is adsorbed onto a medium such as a catalyst, and NOx or the like being a reactant reacts with $NH_3$ or the like being an adsorption substance adsorbed onto the medium, in the reactor.

Further, for example, when executing $CO_2$ separation and recovery processing of separating and recovering $CO_2$ from the exhaust gas containing $CO_2$, a medium such as an absorbing liquid containing amine or the like being a reactant absorbs $CO_2$ being an absorption substance in the reactor, whereby the reactant such as amine reacts with $CO_2$ being an absorption substance.

The operation of the reactor is controlled by a control system so as to appropriately execute the reaction.

In the reactor, the performances of the media such as the catalyst and the absorbing liquid deteriorate with an increase in operation time, and therefore a decrease in the adsorption amount of the adsorption substance adsorbed onto the catalyst or the like and a decrease in the absorption amount of the absorption substance absorbed into the absorbing liquid or the like occur to decrease the reaction rate or the like. Therefore, for example, it is proposed to set the operating parameter in consideration of the deterioration in performance of the media so that the performances of the media take the adsorption amount and the absorption amount before the deterioration.

In the reactor, the medium such as the catalyst deteriorates in medium performance (adsorption performance or the like) that the adsorption substance adsorbs, according to the operating time as explained above, so that the medium performance is not uniform but varies, for example, in a flow direction in which NOx or the like being a reactant passes. Further, in the reactor, the medium such as the absorbing liquid is deteriorated in medium performance (absorption performance or the like) for absorbing the absorption substance being $CO_2$ according to the operating time, so that the medium performance is not uniform but varies, for example, in a flow direction in which amine or the like being a reactant passes. In short, the media such as the catalyst, absorbing liquid, and so on have, for example, medium performance distributions different in medium performances (adsorption performance, absorption performance, and the like) in the flow direction in the reactor.

However, in the prior art, the operation of the reactor is controlled, not taking the medium performance distributions into consideration, and therefore it is not easy to sufficiently achieve an efficient operation of the reactor.

Therefore, a problem to be solved by the present invention is to provide a reactor control system capable of easily achieving an efficient operation of a reactor

BRIEF DESCRIPTION OF THE DRAWINGS

FIG. 1A is a diagram schematically illustrating an example of a reactor control system 100 in a first embodiment.
FIG. 1B is a flowchart illustrating the outline of an operation of a control part 70 in the reactor control system 100 in the first embodiment.
FIG. 1C is a chart illustrating an example of a medium performance distribution found by an inverse analysis part 71 of the control part 70 in the reactor control system 100 in the first embodiment.
FIG. 1D is a chart for explaining an example of the control performed by the control part 70 in the reactor control system 100 in the first embodiment.
FIG. 2A is a diagram schematically illustrating an example of a reactor control system 100 in a second embodiment.
FIG. 2B is a chart for explaining an example of operations of a medium change prediction part 73 and a notification part 74 in the reactor control system 100 in the second embodiment.
FIG. 2C is a chart for explaining an example of the operations of the medium change prediction part 73 and the notification part 74 in the reactor control system 100 in a modification example of the second embodiment.
FIG. 3 is a diagram schematically illustrating an example of a reactor control system 100 in a third embodiment.
FIG. 4 is a diagram schematically illustrating an example of a reactor control system 100 in a modification example of the third embodiment.

DETAILED DESCRIPTION

A reactor control system in an embodiment controls a reactor in which a reactant introduction fluid containing a reactant and an adsorption substance introduction fluid containing an adsorption substance are introduced into an internal space containing a medium, the adsorption substance adsorbed onto the medium and the reactant react in the internal space to produce a product, and a discharge fluid containing the product, an unreacted reactant, and an unadsorbed adsorption substance is discharged from the internal space. The reactor control system in the embodiment controls a reaction occurring in the internal space of the reactor by outputting a control signal to the reactor based on reactant introduction fluid measurement data measured regarding the reactant introduction fluid, adsorption substance introduction fluid measurement data measured regarding the adsorption substance introduction fluid, and discharge fluid measurement data measured regarding the discharge fluid. The control part includes an inverse analysis part. The inverse analysis part finds, as medium performance distribution data, a medium performance distribution in which performance of the medium changes in a flow direction in which the reactant introduction fluid and the adsorption substance introduction fluid pass through the medium, by executing an inverse analysis regarding the reactant introduction fluid measurement data, the adsorption substance introduction fluid measurement data, and the discharge fluid measurement data. The control part is configured to execute output of the control signal based on the medium performance distribution data.

<First embodiment>

[A] Configuration

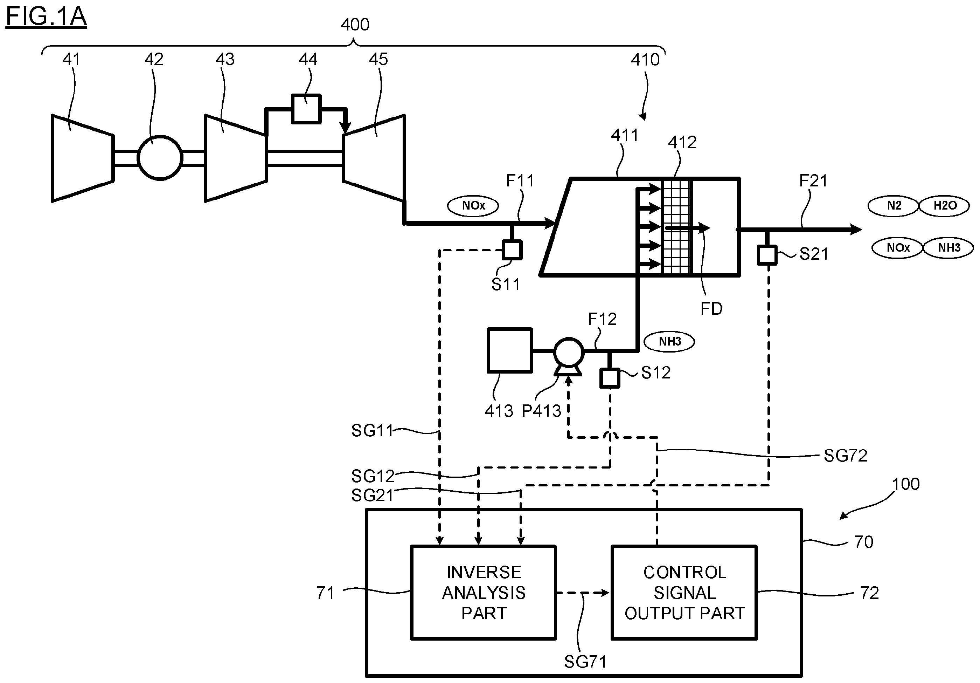

FIG. 1A is a diagram schematically illustrating an example of a reactor control system 100 in a first embodiment.
As illustrated in FIG. 1A, the reactor control system 100 in this embodiment is installed to control a reaction occurring in an exhaust heat recovery boiler 410 constituting a thermal power generation facility 400.

[A-1] Thermal power generation facility 400

The thermal power generation facility 400 has, as illustrated in FIG. 1A, for example, a steam turbine 41, a generator 42, a compressor 43, a combustion chamber 44, and a gas turbine 45 in addition to the exhaust heat recovery boiler 410. In the thermal power generation facility 400, a rotation shaft is coupled to each of the steam turbine 41, the generator 42, the compressor 43, and the gas turbine 45.
Though not illustrated, in the thermal power generation facility 400, the steam turbine 41 is configured to be driven by steam supplied as a working medium through heating in the exhaust heat recovery boiler 410. The combustion chamber 44 is supplied with fuel and air which is compressed by the compressor 43, and the fuel is combusted to generate a combustion gas. The gas turbine 45 is configured to be driven by the combustion gas supplied as a working medium from the combustion chamber 44.
In the thermal power generation facility 400 in this embodiment, a catalyst 412 (denitrification catalyst) is placed as a medium in an internal space of a boiler main body 411 in the exhaust heat recovery boiler 410. In the exhaust heat recovery boiler 410, an exhaust gas discharged from the gas turbine 45 is introduced as a reactant introduction fluid F11 into the internal space of the boiler main body 411. The reactant introduction fluid F11 contains NOx (NO, $NO_2$, and the like as main components) being a reactant. Additionally, into the internal space of the boiler main body 411, an ammonia fluid stored in an ammonia storage tank 413 is introduced as an adsorption substance introduction fluid F12 via an ammonia supply pump P413. The adsorption substance introduction fluid F12 contains $NH_3$ being an adsorption substance. Further, from the internal space of the boiler main body 411, a discharge fluid F21 is discharged.
The exhaust heat recovery boiler 410, the ammonia storage tank 413, and the ammonia supply pump P413 constitute a reactor.
In the internal space of the boiler main body 411 constituting the exhaust heat recovery boiler 410, a chemical reaction occurs to carry out denitrification processing. Specifically, in the internal space of the boiler main body 411, $NH_3$ contained as an adsorption substance in the adsorption substance introduction fluid F12 is adsorbed onto the catalyst 412. Then, NOx contained as a reactant in the reactant introduction fluid F11 reacts with $NH_3$ adsorbed onto the catalyst 412, whereby $N_2$ and $H_2O$ are produced as products. In other words, in the internal space of the boiler main body 411, a reduction reaction in which $NH_3$ as a reducing agent reduces NOx occurs. Therefore, the discharge fluid F21 contains $N_2$ and $H_2O$ which are produced as products. In addition to this, the discharge fluid F21 contains NOx which is an unreacted reactant and $NH_3$ which is an unadsorbed adsorption substance.
In the thermal power generation facility 400 in this embodiment, measuring parts S11, S12, S21 are provided.
The measuring part S11 is configured to perform measurement regarding the reactant introduction fluid F11 to output measurement data SG11 (reactant introduction fluid measurement data). The measuring part S12 is configured to perform measurement regarding the adsorption substance introduction fluid F12 (adsorption substance introduction fluid) to output measurement data SG12 (adsorption substance introduction fluid measurement data). The measuring part S21 is configured to perform measurement regarding the discharge fluid F21 to output measurement data SG21 (discharge fluid measurement data).

[A-2] Reactor control system 100

The reactor control system 100 has a control part 70 as illustrated in FIG. 1A.

In the reactor control system 100, the measurement data SG11 (reactant introduction fluid measurement data), the measurement data SG12 (adsorption substance introduction fluid measurement data), and the measurement data SG21 (discharge fluid measurement data) are input as input signals into the control part 70. The control part 70 outputs a control signal SG72 based on the measurement data SG11, SG12, and SG21 to the ammonia supply pump P413 constituting the reactor in the thermal power generation facility 400. This controls the reactions occurring in the internal space of the boiler main body 411 constituting the reactor.

In this embodiment, the control part 70 includes an inverse analysis part 71 and a control signal output part 72. The control part 70 is composed of an arithmetic unit (not illustrated) and a memory device (not illustrated), and the arithmetic unit performs arithmetic processing using a program stored in the memory device, whereby the control part 70 operates as the parts.

[A-2-1] Inverse analysis part 71

The inverse analysis part 71 of the control part 70 executes an inverse analysis regarding the measurement data SG11 (reactant introduction fluid measurement data), the measurement data SG12 (adsorption substance introduction fluid measurement data), and the measurement data SG21 (discharge fluid measurement data).

The inverse analysis part 71 executes the inverse analysis to find a medium performance distribution in which the adsorption performance of the catalyst 412 changes in a flow direction FD (lateral direction in FIG. 1A) in which the reactant introduction fluid F11 and the adsorption substance introduction fluid F12 (adsorption substance introduction fluid) pass through the catalyst 412 being a medium. Then, the inverse analysis part 71 outputs data regarding the found medium performance distribution, as medium performance distribution data SG71. The inverse analysis is executed, for example, using a gradient descent method.

In the inverse analysis part 71, the inverse analysis is executed using a model constructed about the relation between the measurement data SG11, SG12, SG21 and the medium performance distribution data SG71. The model to be used in the inverse analysis is, for example, a physical model composed of an advection-diffusion equation showing the relation between the measurement data SG11, SG12, SG21 and the medium performance distribution data SG71.

In addition to the above, the model to be used in the inverse analysis may be, for example, a proxy model composed of a neural network made up of an input layer, an intermediate layer (hidden layer), and an output layer. By performing the inverse analysis using the proxy model, it is possible to decrease the calculation load. In the neural network constituting the model to be used in the inverse analysis, an input signal is input into each of nodes constituting the input layer and then output from each of the nodes constituting the input layer to each of nodes constituting the intermediate layer. In each of the nodes constituting the intermediate layer, weighting addition is executed on an input value. Then, the value found in each of the nodes constituting the intermediate layer is output to each of nodes constituting the output layer. In each of the nodes constituting the output layer, weighting addition is executed on an input value. The value of a weighting coefficient to be used in the weighting addition in the model is adjusted by machine learning.

[A-2-2] Control signal output part 72

The control signal output part 72 is configured to execute output of the control signal SG72 based on the medium performance distribution data SG71.

In this embodiment, the control signal output part 72 decides an operating parameter for operating the ammonia supply pump P413 constituting the reactor in the thermal power generation facility 400, according to the medium performance distribution data SG71. Then, the control signal output part 72 outputs the control signal SG72 to the ammonia supply pump P413 so that the ammonia supply pump P413 operates with the decided operating parameter. This controls the reaction occurring in the internal space of the boiler main body 411 constituting the reactor.

**[B]** Operation

The details of the operation to be executed in the reactor control system 100 in this embodiment will be explained.

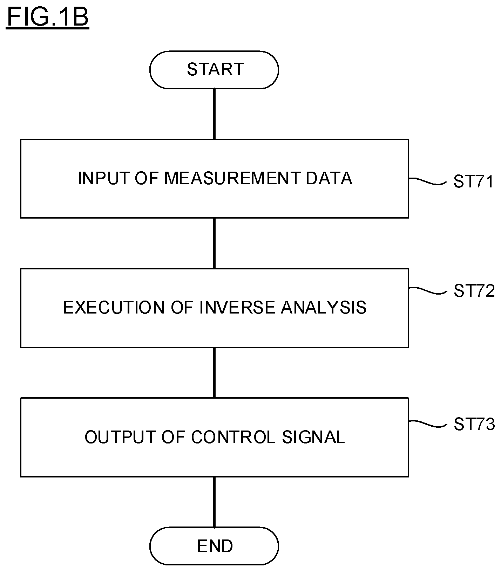

FIG. 1B is a flowchart illustrating the outline of the operation of the control part 70 in the reactor control system 100 in the first embodiment.

**[B-1]** Input of the measurement data (ST71)

In the reactor control system 100 in this embodiment, first, the input of the measurement data SG11, SG12, and SG21 is executed as illustrated in FIG. 1B (ST71).

The measurement data SG11, SG12, SG21 are output from the measuring parts S11, S12, S21 which are placed in the thermal power generation facility 400 and input into the inverse analysis part 71 of the control part 70 (see FIG. 1A).

The measurement data SG11 (reactant introduction fluid measurement data) is data acquired by performing measurement regarding the reactant introduction fluid F11 to be introduced into the internal space of the boiler main body 411 constituting the exhaust heat recovery boiler 410 by the measuring part S11 (see FIG. 1A). The measuring part S11 includes measuring equipment which measures, for example, temperature, pressure, flow velocity, and component concentration, and the measurement data SG11 includes temperature data, pressure data, flow velocity data, and component concentration data.

The measurement data SG12 (adsorption substance introduction fluid measurement data) is data acquired by performing measurement regarding the adsorption substance introduction fluid F12 (adsorption substance introduction fluid) to be introduced into the internal space of the boiler main body 411 constituting the exhaust heat recovery boiler 410 by the measuring part S12 (see FIG. 1A). The measuring part S12 includes measuring equipment which measures, for example, temperature, pressure, flow velocity, and component concentration, and the measurement data SG12 includes temperature data, pressure data, flow velocity data, and component concentration data.

The measurement data SG21 (discharge fluid measurement data) is data acquired by performing measurement regarding the discharge fluid F21 discharged from the internal space of the boiler main body 411 constituting the exhaust heat recovery boiler 410 by the measuring part S21 (see FIG. 1A). The measuring part S21 includes measuring equipment which measures, for example, temperature, pressure, flow velocity, and component concentration, and the measurement data SG21 includes temperature data, pressure data, flow velocity data, and component concentration data.

[B-2] Execution of the inverse analysis (ST72)

Next, an inverse analysis is executed as illustrated in FIG. 1B (ST72).

Here, the inverse analysis is executed by the inverse analysis part 71 of the control part 70. By the execution of the inverse analysis, the medium performance distribution in which the adsorption performance of the catalyst 412 changes in the flow direction FD is found and output to the control signal output part 72 of the control part 70 as the medium performance distribution data SG71 (see FIG. 1A).

In the inverse analysis part 71, the inverse analysis is executed using the model constructed based on the relation between the measurement data SG11, SG12, SG21 and the medium performance distribution data SG71. The model to be used in the inverse analysis is composed of an advection-diffusion equation. In the inverse analysis, the advection-diffusion equation is iteratively calculated to find the medium performance distribution in which an objective function (difference between a reactor outlet concentration found by the calculation and the measurement data S21) becomes minimum.

The advection-diffusion equation is indicated by the following (Equation 1).
[Math 1]

$$\frac{\partial(\rho\phi)}{\partial t} + \text{div}(\rho u\phi) = \text{div}\left(\Gamma \cdot \text{grad}\phi\right) + \Omega \cdot \sum r \quad \cdots \text{(Equation 1)}$$

Factors in (Equation 1) are as follows.

$\phi$: physical quantity (temperature, concentration, or the like)
$\rho$: density
$t$: time
$u$: flow velocity
$\Gamma$: diffusion coefficient (physical property value)
$\Omega$: coefficient of medium performance (catalytic performance)
$r$: reaction velocity

Here, the catalyst 412 is divided into a plurality of meshes in the flow direction FD, and the "coefficient $\Omega$ of the medium performance (catalytic performance)" in (Equation 1) is calculated regarding each of the plurality of meshes to find the medium performance distribution.

In this embodiment, the value of each of the factors in (Equation 1) is found from the measurement data SG11, SG12, SG21. As the value of each of the factors in (Equation 1), a value regarding a mixed fluid in which the reactant introduction fluid F 11 and the adsorption substance introduction fluid F12 are mixed is used on the upstream side (inlet side) in the flow direction FD, and a value regarding the discharge fluid F21 is used on the downstream side (outlet side) in the flow direction FD. Specifically, the value regarding the discharge fluid F21 is found by a calculation using (Equation 1) with the value regarding the mixed fluid as a boundary condition. Here, the coefficient of the medium performance (catalytic performance) is regarded as an unknown, and the coefficient of the medium performance (catalytic performance) with which the measurement data SG21 and the calculation value found by the calculation using (Equation 1) become equal is searched for by the inverse analysis. Therefore, iterative calculations are performed so that the objective function of the inverse analysis (difference between the measurement data SG21 and a calculation result) becomes minimum.

In (Equation 1), $\delta(\rho\varphi)/\delta t$ is an unsteady term which is a term regarding a "temporal change of the component concentration at the mesh". $div(\rho u\varphi)$ is a convection term which is a term regarding a "component transported to the mesh by the flow velocity". $div(\Gamma \cdot grad\varphi)$ is a diffusion term which is a term regarding a "component transported to the mesh by the concentration difference". $\Omega \cdot \Sigma r$ is a generation term which is a term regarding a " component generated in the mesh by a chemical reaction and consumed". The convection term and the diffusion term are terms regarding the difference between the incoming amount (inflow amount) and the outgoing amount (outflow amount).

In this embodiment, in a state where the coefficient $\Omega$ of the medium performance (catalytic performance) is assumed to be an assumed value, (Equation 1) is solved using the measurement data SG11, SG12 (concentration, pressure, temperature, flow velocity) measured regarding the gas (reactant introduction fluid F11, adsorption substance introduction fluid F12) on the inlet side, whereby the concentration of the component contained in the gas (discharge fluid F21) on the outlet side is predicted. The concentration of the component contained in the gas (discharge fluid F21) on the outlet side is included in the measurement data SG21 actually measured regarding the discharge fluid F21. Therefore, the inverse analysis is performed using the concentration value of the component actually measured regarding the gas (discharge fluid F21) on the outlet side and the predicted value of the component predicted regarding the gas (discharge fluid F21) on the outlet side as explained above, whereby the coefficient $\Omega$ of the medium performance (catalytic performance) can be acquired.

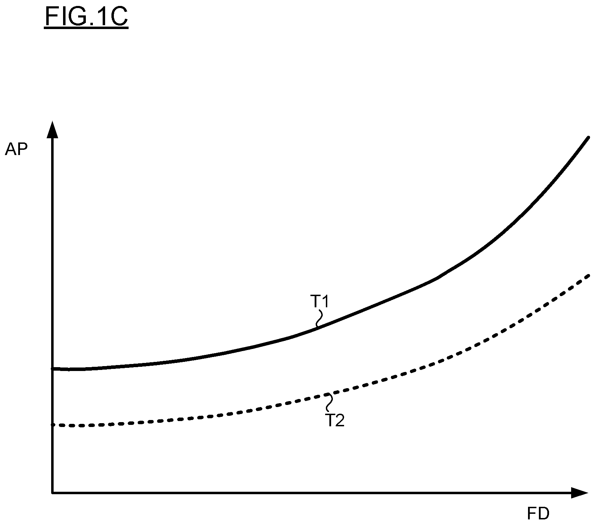

FIG. 1C is a chart illustrating an example of the medium performance distribution found by the inverse analysis part 71 of the control part 70 in the reactor control system 100 in the first embodiment.

In FIG. 1C, the horizontal axis indicates the position in the flow direction FD (see FIG. 1C) in which fluid flows through the catalyst 412 (medium), and the left side is the upstream side (inlet side) and the right side is the downstream side (outlet side). In FIG. 1C, the vertical axis indicates an adsorption performance AP (for example, a catalyst carrying amount) of the catalyst 412 (medium). Further, in FIG. 1C, a solid line indicates a case where the operating time of the thermal power generation facility 400 is a first operating time T1, and a broken line indicates a case where the operating time of the thermal power generation facility 400 is a second operating time T2 longer than the first operating time T1 (T1 < T2).

Note that in this embodiment, the reaction velocity r in (Equation 1) is expressed by the following (Equation 2A) in an adsorption reaction in which $NH_3$ being an adsorption substance is adsorbed onto the catalyst 412 being the medium. In a desorption reaction in which $NH_3$ is desorbed from the catalyst 412 to which $NH_3$ has been adsorbed, the reaction velocity r is expressed by the following (Equation 2B). In a chemical reaction in which NOx being a reactant reacts with $NH_3$ adsorbed onto the catalyst 412 to be reduced, the reaction velocity r is expressed by the following (Equation 2C).

[Math 2]

$$r = A[NH_3](1 - \theta_{NH3}) \quad \cdots \text{(Equation 2A)}$$

[Math 3]

$$r = A \cdot \exp\left(-\frac{E}{RT}\right) \cdot \theta_{NH3} \quad \cdots \text{(Equation 2B)}$$

[Math 4]

$$r = A \cdot \exp\left(-\frac{E}{RT}\right) \cdot \theta_{NH3} [NOx] \quad \cdots \text{(Equation 2C)}$$

Factors in (Equation 2A) to (Equation 2C) are as follows.

r: reaction velocity [1/s]
A: frequency factor [1/s or $m^3/(mol \cdot s)$]
$[NH_3]$: concentration of $NH_3$
$\theta_{NH3}$: coverage of the catalyst 412 covered with $NH_3$
E: activation energy [J/(mol · K)]
R: gas constant [J/mol)]
T: temperature [K]

[B-3] Output of the control signal (ST73)

Next, as illustrated in FIG. 1B, the control signal SG72 is output (ST73).

Here, the control signal output part 72 executes the output of the control signal SG72 based on the medium performance distribution data SG71 (see FIG. 1A).

In this embodiment, the control signal output part 72 decides the operating parameter for operating the ammonia supply pump P413 according to the medium performance distribution data SG71. Then, the control signal output part 72 outputs the control signal SG72 to the ammonia supply pump P413 so that the ammonia supply pump P413 operates with the decided operating parameter. This controls the reaction occurring in the internal space of the boiler main body 411 constituting the reactor. The control is executed so that the reaction occurring in the internal space of the boiler main body 411 proceeds, for example, at a reaction velocity set at the time of design.

The output of the control signal SG72 is executed online every time the input of the measurement data SG11, SG12, SG21 is executed.

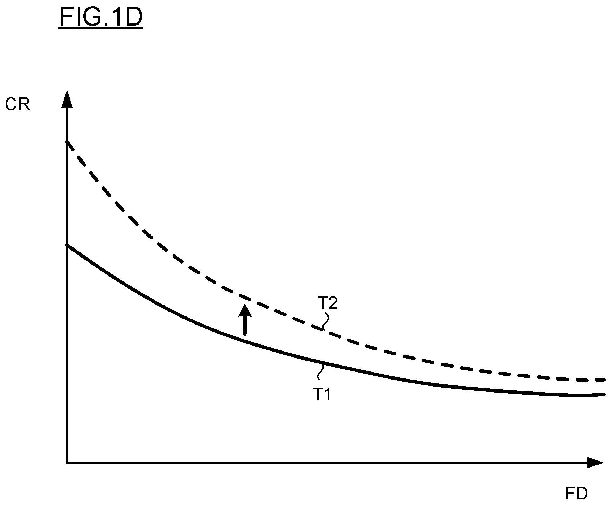

FIG. 1D is a chart for explaining an example of the control performed by the control part 70 in the reactor control system 100 in the first embodiment.

In FIG. 1D, the horizontal axis indicates the position in the flow direction FD (see FIG. 1A) in which the fluid flows through the catalyst 412 (medium), and the left side is the upstream side and the right side is the downstream side. In FIG. 1D, the vertical axis indicates a coverage CR of the catalyst 412 (medium) covered with $NH_3$ (adsorption substance). Further, in FIG. 1D, a solid line indicates a case where the operating time of the thermal power generation facility 400 is a first operating time T1, and a broken line indicates a case where the operating time of the thermal power generation facility 400 is a second operating time T2 longer than the first operating time T1 (T1 < T2).

The adsorption performance (medium performance) of the catalyst 412 (medium) adsorbing $NH_3$ (adsorption substance) decreases with an increase in the operating time of the thermal power generation facility 400 and an increase in time when the reaction occurs in the internal space of the boiler main body 411. Therefore, in this embodiment, if the adsorption performance (medium performance) of the catalyst 412 adsorbing $NH_3$ decreases to be lower than, for example, a reference value, the operation of the ammonia supply pump P413 is controlled to increase the flow velocity of the adsorption substance introduction fluid F12 containing $NH_3$. This increases the coverage CR of the catalyst 412 covered with $NH_3$ in the flow direction FD as illustrated in FIG. 1D. Thus, the adsorption amount of $NH_3$ adsorbed onto the catalyst 412 in the flow direction FD takes, for example, the same distribution before the decrease in the adsorption performance. As a result of this, in the internal space of the boiler main body 411 constituting the reactor, for example, a reaction occurs as before the decrease in the adsorption performance.

Note that control may be performed so that an average value of the adsorption amount of $NH_3$ adsorbed onto the catalyst 412 in the flow direction FD becomes, for example, the same value as that before the decrease in the adsorption performance.

The adsorption performance of the catalyst 412 adsorbing $NH_3$ varies according to a load on the thermal power generation facility 400. The exhaust gas exhausted from the gas turbine 45 of the thermal power generation facility 400 and introduced into the boiler main body 411 as the reactant introduction fluid F11 contains NOx being the reactant. In the reactant introduction fluid F11, NOx is mainly NO and $NO_2$, and the ratio of $NO_2$ to NO increases with a decrease in the load on the thermal power generation facility 400. In other words, the ratio of $NO_2$ to NO is larger in a case where a part-load operation is executed than in a case where a rated operation is executed in the thermal power generation facility 400. The reaction velocity of the reaction occurring in the internal space of the boiler main body 411 decreases with an increase in the ratio of $NO_2$ to NO. Therefore, the adsorption performance (medium performance) of the catalyst 412 decreases with a decrease in the load of the operation. Accordingly, the operation of the ammonia supply pump P413 is controlled so that the coverage CR of the catalyst 412 covered with $NH_3$ increases with a decrease in the load on the thermal power generation facility 400.

[C] Conclusion

As explained above, the reactor control system 100 in this embodiment is configured such that the control part 70 controls the reaction occurring in the internal space of the boiler main body 411 constituting the exhaust heat recovery boiler 410 being a reactor. The control part 70 includes the inverse analysis part 71 and the control signal output part 72.

Into the inverse analysis part 71, the measurement data SG11 (reactant introduction fluid measurement data), the measurement data SG12 (adsorption substance introduction fluid measurement data), and the measurement data SG21 (discharge fluid measurement data) are input. The measurement data SG11 is data regarding the reactant introduction fluid F11 to be introduced into the internal space of the boiler main body 411. The measurement data SG12 is data regarding the adsorption substance introduction fluid F12 to be introduced into the internal space of the boiler main body 411. The measurement data SG21 is data regarding the discharge fluid F21 discharged from the internal space of the boiler main body 411. The inverse analysis part 71 executes an inverse analysis about the measurement data SG11, the measurement data SG12, and the measurement data SG21 to find, as the medium performance distribution data SG71, the medium performance distribution in which the adsorption performance of the catalyst 412 changes in the flow direction FD in which the reactant introduction fluid F11 and the adsorption substance introduction fluid F12 pass through the catalyst 412 being the medium in the internal space of the boiler main body 411.

Then, based on the medium performance distribution data SG71, the control signal output part 72 executes output of the control signal SG72. The control signal SG72 is output to the ammonia supply pump P413 constituting the exhaust heat recovery boiler 410 being the reactor to control the flow velocity of the adsorption substance introduction fluid F12. This controls the reaction occurring in the internal space of the boiler main body 411 constituting the reactor. The control is executed so that the reaction occurring in the internal space of the boiler main body 411 proceeds, for example, at a reaction velocity set at the time of design.

Therefore, according to the reactor control system 100 in this embodiment, the reaction appropriately proceeds in the exhaust heat recovery boiler 410 being the reactor, so that an efficient operation of the reactor can be easily achieved.

[D] Modification example

The case where the reactant introduction fluid F11 is gas (exhaust gas) has been explained in the above embodiment, but the present invention is not limited to this. The reactant introduction fluid F11 may be liquid. In other words, the reactor control system 100 in this embodiment is applicable also to a case where a liquid-solid reaction occurs in addition to a case where a gas-solid reaction occurs in the internal space of the reactor.

The case where the reactant is NOx (NO, $NO_2$, and the like are the main components) and the adsorption substance is $NH_3$ has been explained in the above embodiment, but the present invention is not limited to this. The reactor control system 100 in this embodiment is applicable also to a case where the reactant and the adsorption substance are substances other than the above.

<Second embodiment>

[A] Configuration

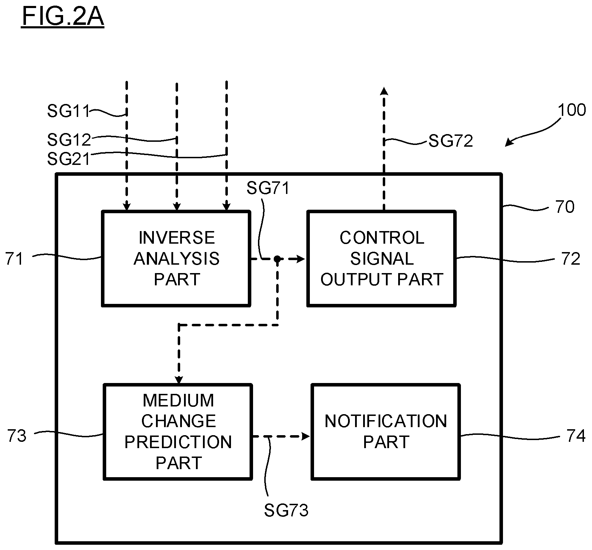

FIG. 2A is a diagram schematically illustrating an example of a reactor control system 100 in a second embodiment.

In FIG. 2A, the illustration of the thermal power generation facility 400 being a control target of the reactor control system 100 is omitted, unlike the case of FIG. 1A.

As illustrated in FIG. 2A, in the reactor control system 100 in this embodiment, the control part 70 includes a medium change prediction part 73 and a notification part 74, unlike the case of the first embodiment (see FIG. 1A). Except for this point and related points, this embodiment is the same as the first embodiment. Therefore, the explanation of the overlapping matters is omitted as appropriate in this embodiment.

[A-1] Medium change prediction part 73

In the control part 70, the medium performance distribution data SG71 is input into the medium change prediction part 73 from the inverse analysis part 71 as illustrated in FIG. 2A. In the medium change prediction part 73, the medium performance distribution data SG71 is stored in association with the time point when it is input from the inverse analysis part 71.

The medium change prediction part 73 predicts the change of the medium performance distribution changing in time series, based on a plurality of pieces of the medium performance distribution data SG71 found at a plurality of time points by the inverse analysis part 71, to find medium change prediction data SG73. The medium change prediction data SG73 is output from the medium change prediction part 73 to the notification part 74.

[A-2] Notification part 74

Into the notification part 74, the medium change prediction data SG73 is input from the medium change prediction part 73 as illustrated in FIG. 2A. The notification part 74 finds the time point when the adsorption performance of the catalyst 412 being the medium becomes other than a predetermined state based on the medium change prediction data SG73 and notifies of it. For example, the notification part 74 notifies a user of a time point when the deterioration of the adsorption performance of the catalyst 412 proceeds and the replacement of the catalyst 412 is necessary. For example, the notification is executed by displaying information representing the time point when the replacement of the catalyst 412 is necessary, on a display.

[B] Operation

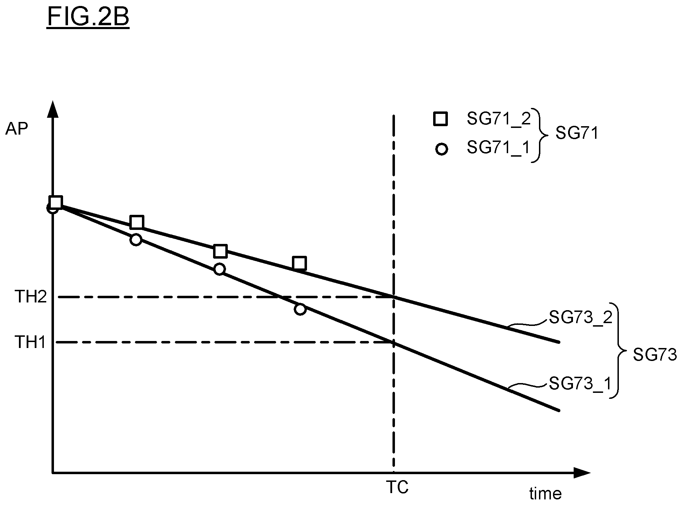

FIG. 2B is a chart for explaining an example of the operations of the medium change prediction part 73 and the notification part 74 in the reactor control system 100 in the second embodiment.

[B-1] Calculation of the medium change prediction data SG73

In this embodiment, as illustrated in FIG. 2B, for example, most upstream side medium change prediction data SG73_1 and most downstream side medium change prediction data SG73_2 are found as the medium change prediction data SG73 in the medium change prediction part 73.
The most upstream side medium change prediction data SG73_1 is prediction data in which the medium performance AP (adsorption performance) of a portion located on the most upstream side (inlet side) in the flow direction FD of the catalyst 412 changes in time series. The most upstream side medium change prediction data SG73_1 is found using the most upstream side medium performance data SG71_1 regarding the medium performance AP of the portion located on the most upstream side (inlet side) of the catalyst 412 of the medium performance distribution data SG71. Here, extrapolation processing is executed on a plurality of pieces of the most upstream side medium performance data SG71_1 which change in time series to find an approximate line, thereby obtaining the most upstream side medium change prediction data SG73_1.
The most downstream side medium change prediction data SG73_2 is prediction data in which the medium performance AP (adsorption performance) of a portion located on the most downstream side (outlet side) in the flow direction FD of the catalyst 412 changes in time series. The most downstream side medium change prediction data SG73_2 is found using most downstream side medium performance data SG71_2 regarding the medium performance AP of the portion located on the most downstream side (outlet side) of the catalyst 412 of the medium performance distribution data SG71. Here, extrapolation processing is executed on a plurality of pieces of the most downstream side medium performance data SG71_2 which change in time series to find an approximate line, thereby obtaining the most downstream side medium change prediction data SG73_2.

[B-2] Notification

In this embodiment, the notification part 74 performs notification, for example, based on the most upstream side medium change prediction data SG73_1 and the most downstream side medium change prediction data SG73_2 as illustrated in FIG. 2B.
Here, a time point TC when the medium performance AP decreases to be equal to or lower than a reference value TH1 in the most upstream side medium change prediction data SG73_1 and the medium performance AP decreases to be equal to or lower than a reference value TH2 in the most downstream side medium change prediction data SG73_2 is found. The notification part 74 notifies the user of the time point TC when the medium performance AP decreases to be equal to or lower than the reference value TH1 and the reference value TH2, as the time point when the replacement of the catalyst 412 is necessary.
Note that the notification part 74 may be configured to perform notification based on one of the most upstream side medium change prediction data SG73_1 and the most downstream side medium change prediction data SG73_2, in addition to the notification based on both the most upstream side medium change prediction data SG73_1 and the most downstream side medium change prediction data SG73_2. Otherwise, the notification part 74 may be configured to perform notification based on an average value of data.

[C] Conclusion

As explained above, the reactor control system 100 in this embodiment includes the medium change prediction part 73 and the notification part 74. The medium change prediction part 73 predicts the change of the medium performance distribution changing in time series, based on the medium performance distribution data SG71 found at the plurality of time points by the inverse analysis part 71, to find the medium change prediction data SG73. The notification part 74 is configured to find the time point TC when the medium performance AP (adsorption performance) of the catalyst 412 becomes other than the predetermined state based on the medium change prediction data SG found by the medium change prediction part 73 and notify of it. The time point TC when the medium performance AP of the catalyst 412 becomes other than the predetermined state is, for example, a moment when the replacement of the catalyst 412 is necessary.

Therefore, in this embodiment, the user can grasp a future medium performance AP of the catalyst 412, so that an efficient operation of the reactor can be easily achieved.

[D] Modification example

A modification example of the above embodiment will be explained.

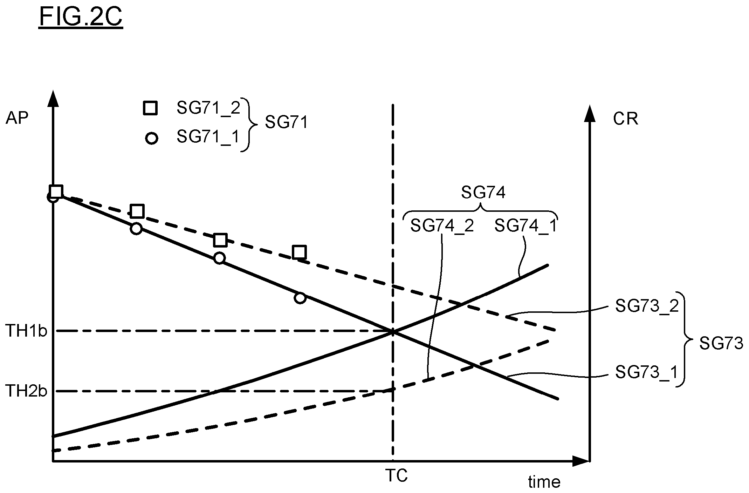

FIG. 2C is a chart for explaining an example of the operations of the medium change prediction part 73 and the notification part 74 in the reactor control system 100 in a modification example of the second embodiment.

As illustrated in FIG. 2C, the notification part 74 may be configured to find coverage prediction data SG74 from the medium change prediction data SG73 and then perform notification using the coverage prediction data SG74.

The coverage prediction data SG74 that is data in which a coverage CR of $NH_3$ being an adsorption substance covering the catalyst 412 changes in time series is found based on the medium change prediction data SG73 using a model regarding the relation between the adsorption performance AP and the coverage CR of the catalyst 412. In the coverage prediction data SG74, the coverage CR increases with a decrease in the adsorption performance AP of the catalyst 412 according to time as is found from the relation with the medium change prediction data SG73. As has been explained, the coverage CR increases according to time in the coverage prediction data SG74 in order to make the reaction proceed at the same reaction velocity as that before the adsorption performance AP of the catalyst 412 decreases.

Here, as the coverage prediction data SG74, for example, most upstream side coverage prediction data SG74_1 and most downstream side coverage prediction data SG74_2 are found as explained above in the notification part 74. The most upstream side coverage prediction data SG74_1 is found using the most upstream side medium change prediction data SG73_1. The most downstream side coverage prediction data SG74_2 is found using the most downstream side medium change prediction data SG73_2.

Then, the notification part 74 in this modification example finds the time point TC when the coverage CR increases to be equal to or higher than a reference value TH1b in the most upstream side coverage prediction data SG74_1 and the coverage CR increases to be equal to or higher than a reference value TH2b in the most downstream side coverage prediction data SG74_2. The notification part 74 notifies the user of the time point TC when the coverage CR increases to be equal to or higher than the reference value TH1b and the reference value TH2b, as the time point when the replacement of the catalyst 412 is necessary. The reference value TH1b and the reference value TH2b are set, for example, in consideration of the relation between the amount of cost increasing with an increase in the coverage CR and the cost regarding the replacement of the catalyst 412.

<Third embodiment>

[A] Configuration

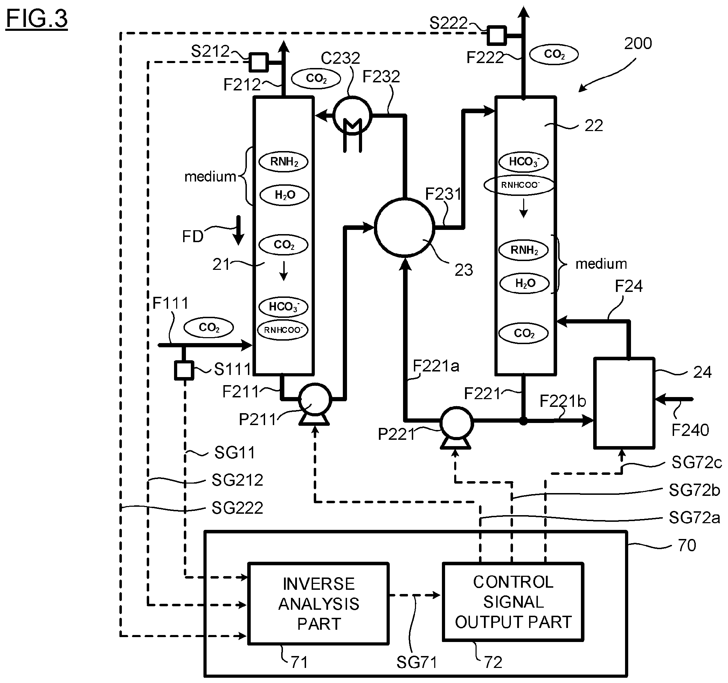

FIG. 3 is a diagram schematically illustrating an example of a reactor control system 100 in a third embodiment.

As illustrated in FIG. 3, the reactor control system 100 in this embodiment is installed to control a reaction occurring in a carbon dioxide separation and recovery facility 200, unlike the case of the first embodiment (see FIG. 1A). Except for this point and related points, this embodiment is the same as the first embodiment. Therefore, the explanation of the overlapping matters is omitted as appropriate in this embodiment.

[A-1] Carbon dioxide separation and recovery facility 200

The carbon dioxide separation and recovery facility 200 has an absorption tower 21, a regeneration tower 22, a regenerative heat exchanger 23, and a reboiler 24 as illustrated in FIG. 3. The carbon dioxide separation and recovery facility 200 functions as a reactor by the parts.

[A-1-1] Absorption tower 21

In the carbon dioxide separation and recovery facility 200, an absorption substance introduction fluid F111 is introduced into an internal space of the absorption tower 21, and an absorption tower introduction fluid F232 is introduced into the internal space. Then, from the internal space of the absorption tower 21, an absorption tower discharge fluid F211 (first discharge fluid) and an absorption tower discharge fluid F212 (second discharge fluid) are discharged.

Here, the absorption tower introduction fluid F232 is liquid in which amine (monoethanolamine; indicated as $RNH_2$ in the drawing) being a reactant is dissolved in water ($H_2O$), and functions as an amine absorbing liquid being a medium. The absorption tower introduction fluid F232 is introduced from an upper part of the absorption tower 21 into the internal space and flows to a lower part of the absorption tower 21.

The absorption substance introduction fluid F111 is gas containing $CO_2$ being an absorption substance and is, for example, an exhaust combustion gas. The absorption substance introduction fluid F111 is introduced from a lower part of the absorption tower 21 into the internal space.

In the internal space of the absorption tower 21, $CO_2$ being an absorption substance is absorbed into the amine absorbing liquid being a medium. Then, $CO_2$ absorbed into the amine absorbing liquid reacts with amine ($RNH_2$) contained as a reactant in the amine absorbing liquid to produce a product. The product is, for example, hydrogen carbonate ion ($HCO_3^-$) and carbamate ($RNHCOO^-$).

The absorption tower discharge fluid F211 is liquid containing products ($HCO_3^-$, $RNHCOO^-$). The absorption tower discharge fluid F211 additionally contains amine ($RNH_2$) being an unreacted reactant. The absorption tower discharge fluid F211 is discharged from a lower part of the absorption tower 21.

The absorption tower discharge fluid F212 is gas after $CO_2$ being an absorption substance in the absorption substance introduction fluid F111 is absorbed into the amine absorbing liquid. The absorption tower discharge fluid F212 also contains $CO_2$ being an unabsorbed absorption substance into the amine absorbing liquid. The absorption tower discharge fluid F212 is discharged from an upper part of the absorption tower 21.

[A-1-2] Regeneration tower 22

In the carbon dioxide separation and recovery facility 200, a regeneration tower introduction fluid F231 is introduced into an internal space of the regeneration tower 22, and a heating fluid F24 is introduced into the internal space from the reboiler 24. Then, from the internal space of the regeneration tower 22, a regeneration tower discharge fluid F221 and a regeneration tower discharge fluid F222 are discharged.

The regeneration tower introduction fluid F231 is liquid to be introduced into the regeneration tower 22 after the absorption tower discharge fluid F211 containing the products ($HCO_3^-$, $RNHCOO^-$) produced in the absorption tower 21 is used for the heat exchange in the regenerative heat exchanger 23. The regeneration tower introduction fluid F231 is introduced from an upper part of the regeneration tower 22 into the internal space.

The heating fluid F24 is introduced into the internal space from a lower part of the regeneration tower 22. In the regeneration tower 22, $CO_2$ is desorbed as a desorbed substance from $HCO_3^-$ and $RNHCOO^-$ contained in the regeneration tower introduction fluid F231 and amine ($RNH_2$) and water ($H_2O$) are produced, by the heat of the heating fluid F24.

The regeneration tower discharge fluid F221 is liquid containing amine ($RNH_2$) and water ($H_2O$) generated in the regeneration tower 22. The regeneration tower discharge fluid F221 is discharged from a lower part of the regeneration tower 22.

The regeneration tower discharge fluid F222 is gas containing $CO_2$ desorbed in the internal space of the regeneration tower 22. The regeneration tower discharge fluid F222 is discharged from an upper part of the regeneration tower 22 and recovered.

Part of the regeneration tower discharge fluid F221 is discharged as a reboiler introduction fluid F221b from the regeneration tower 22 to the reboiler 24. A rest F221a of the regeneration tower discharge fluid F221 is liquid which is used for the heat exchange in the regenerative heat exchanger 23 and then introduced as the absorption tower introduction fluid F232 into the absorption tower 21, and is used as the amine absorbing liquid in the absorption tower 21.

[A-1-3] Regenerative heat exchanger 23

In the carbon dioxide separation and recovery facility 200, the absorption tower discharge fluid F211 after being increased in pressure by a circulating pump P211 (first circulating pump) is introduced from the absorption tower 21 into the regenerative heat exchanger 23. Further, the regeneration tower discharge fluid F221 after being increased in pressure by a circulating pump P221 (second circulating pump) is introduced from the regeneration tower 22 into the regenerative heat exchanger 23. Both the circulating pump P211 (first circulating pump) and the circulating pump P221 (second circulating pump) are synchronously driven.

In the regenerative heat exchanger 23, heat exchange is performed between the absorption tower discharge fluid F211 and the regeneration tower discharge fluid F221. The absorption tower discharge fluid F211, in a state of being heated by the heat exchange in the regenerative heat exchanger 23, is introduced as the regeneration tower introduction fluid F231 into the regeneration tower 22. On the other hand, the regeneration tower discharge fluid F221, in a state of being cooled by the heat exchange in the regenerative heat exchanger 23, is introduced as the absorption tower introduction fluid F232 into the absorption tower 21. Here, the absorption tower introduction fluid F232 after being discharged from the regenerative heat exchanger 23 and in a state of being further cooled by a cooler C232 (lean liquid cooler), is introduced into the absorption tower 21.

[A-1-4] Reboiler 24

In the carbon dioxide separation and recovery facility 200, the reboiler 24 is configured to receive the reboiler introduction fluid F221b introduced into the internal space and heat the reboiler introduction fluid F221b by input heat F240 to generate the heating fluid F24.

[A-1-5] Measuring parts S111, S212, S222

In the carbon dioxide separation and recovery facility 200 in this embodiment, measuring parts S111, S212, S222 are provided. The measuring part S111 is configured to perform measurement regarding the absorption substance introduction fluid F111 to output measurement data SG111 (adsorption substance introduction fluid measurement data). The measuring part S212 is configured to perform measurement regarding the absorption tower discharge fluid F212 to output measurement data SG212 (discharge fluid measurement data). The measuring part S222 is configured to perform measurement regarding the regeneration tower discharge fluid F222 to output measurement data SG222 (discharge fluid measurement data).

[A-2] Reactor control system 100

The reactor control system 100 has a control part 70 as in the case of the first embodiment as illustrated in FIG. 3.
In this embodiment, into the control part 70, the measurement data SG111 (adsorption substance introduction fluid measurement data) measured regarding the adsorption substance introduction fluid F111, the measurement data SG212 (discharge fluid measurement data) measured regarding the absorption tower discharge fluid F212, and the measurement data SG222 (discharge fluid measurement data) measured regarding the regeneration tower discharge fluid F222, are input as input signals. The control part 70 outputs control signals SG72a, SG72b, SG72c respectively to the circulating pump P211 (first circulating pump), the circulating pump P221 (second circulating pump), and the reboiler 24 which constitute the reactor in the carbon dioxide separation and recovery facility 200, based on the measurement data SG111, SG 212, SG222. This controls the reaction occurring in the internal space of the absorption tower 21.
The control part 70 in this embodiment includes the inverse analysis part 71 and the control signal output part 72 as in the case of the first embodiment.

[A-2-1] Inverse analysis part 71

The inverse analysis part 71 executes an inverse analysis regarding the measurement data SG111 (adsorption substance introduction fluid measurement data), the measurement data SG212 (discharge fluid measurement data), and the measurement data SG222 (discharge fluid measurement data).
The inverse analysis part 71 is configured to find the medium performance distribution in which the absorption performance of the amine absorbing liquid being a medium changes in the flow direction FD in which the absorption substance introduction fluid F111 flows in the internal space of the absorption tower 21, as the medium performance distribution data SG71 by the execution of an inverse analysis. In the inverse analysis part 71, the inverse analysis is executed using a model constructed about the relation between the measurement data SG111, SG212, SG222 and the medium performance distribution data SG71.

[A-2-2] Control signal output part 72

The control signal output part 72 is configured to execute output of the control signal SG72 based on the medium performance distribution data SG71.
In this embodiment, the control signal output part 72 decides operating parameters for operating the circulating pump P211, the circulating pump P221, and the reboiler 24, respectively, which constitute the reactor in the carbon dioxide separation and recovery facility 200, according to the medium performance distribution data SG71. Then, the control signal output part 72 outputs control signals SG72a, SG72b, SG72c to the parts respectively so that the circulating pump P211, the circulating pump P221, and the reboiler 24 operate with the decided operating parameters. The control signal SG72c controls the flow rate of the input heat F240. This can control the reaction occurring in the internal space of the absorption tower 21 constituting the reactor.

**[B]** Operation

The details of the operation to be executed in the reactor control system 100 in this embodiment will be explained.

**[B-1]** Input of the measurement data (ST71)

Also in this embodiment, the input of the measurement data (ST71) is executed first as illustrated in FIG. 1B as in the case of the first embodiment.

Here, the measurement data SG111, SG212, SG222 are output from the measuring parts S111, S212, S222 which are placed in the carbon dioxide separation and recovery facility 200, and the measurement data SG111, SG212, SG222 are input into the inverse analysis part 71 of the control part 70 (see FIG. 3).

The measurement data SG111 (adsorption substance introduction fluid measurement data) is data acquired by performing measurement regarding the absorption substance introduction fluid F111 by the measuring part S 111 (see FIG. 3). The measuring part S 111 includes measuring equipment which measures, for example, temperature, pressure, flow velocity, and component concentration, and the measurement data SG111 includes temperature data, pressure data, flow velocity data, and component concentration data.

The measurement data SG212 (discharge fluid measurement data) is data acquired by performing measurement regarding the absorption tower discharge fluid F212 by the measuring part S212 (see FIG. 3). The measuring part S212 includes measuring equipment which measures, for example, temperature, pressure, flow velocity, and component concentration, and the measurement data SG212 includes temperature data, pressure data, flow velocity data, and component concentration data.

The measurement data SG222 (discharge fluid measurement data) is data acquired by performing measurement regarding the regeneration tower discharge fluid F222 by the measuring part S222 (see FIG. 3). The measuring part S222 includes measuring equipment which measures, for example, temperature, pressure, flow velocity, and component concentration, and the measurement data SG222 includes temperature data, pressure data, flow velocity data, and component concentration data.

[B-2] Execution of the inverse analysis (ST72)

Next, an inverse analysis is executed as in the case of the first embodiment as illustrated in FIG. 1B (ST72).

Here, the inverse analysis is executed by the inverse analysis part 7, and the medium performance distribution in which the absorption performance of the amine absorbing liquid changes in the flow direction FD in which the amine absorbing liquid (absorption tower introduction fluid F232) flows in the internal space of the absorption tower 21 is found. The medium performance distribution found by the inverse analysis part 71 is output to the control signal output part 72 of the control part 70 as the medium performance distribution data SG71 (see FIG. 3).

Though not illustrated, the medium performance distribution found in this embodiment is found, for example, so that the absorption performance of the amine absorbing liquid increases from the downstream side (lower side in the drawing) to the upstream side (upper side in the drawing). Further, the absorption performance of the amine absorbing liquid decreases according to the operating time.

[B-3] Output of the control signal (ST73)

Next, as illustrated in FIG. 1B, the control signal SG72 is output as in the case of the first embodiment (ST73).

In this embodiment, the control signal output part 72 decides the operating parameters for operating the circulating pump P211, the circulating pump P221, and the reboiler 24, respectively, which constitute the reactor in the carbon dioxide separation and recovery facility 200, according to the medium performance distribution data SG71. Then, the control signal output part 72 outputs the control signals SG72a, SG72b, SG72c to the parts so that the circulating pump P211, the circulating pump P221, and the reboiler 24 operate with the decided operating parameters. This controls the reaction occurring in the internal space of the absorption tower 21 constituting the reactor. The control is executed so that the reaction occurring in the internal space of the absorption tower 21 proceeds, for example, at the reaction velocity set at the time of design.

The absorption performance (medium performance) of the amine absorbing liquid (medium) absorbing $CO_2$ (absorption substance) in the internal space of the absorption tower 21 decreases over time. Therefore, in this embodiment, if the absorption performance (medium performance) of the amine absorbing liquid absorbing $CO_2$ decreases in the absorption tower 21, the operations of the circulating pump P211 and the circulating pump P221 are controlled so that the flow velocity of the regeneration tower discharge fluid F221a containing the amine absorbing liquid reproduced in the regeneration tower 22 increases. In addition, the operation of the reboiler 24 is controlled so that the flow velocity of the heating fluid F24 to be introduced from the reboiler 24 into the regeneration tower 22 increases in order to decrease the ratio of $CO_2$ (absorption substance) remaining in the regeneration tower discharge fluid F221a. This increases the ratio of the amine absorbing liquid absorbing $CO_2$ in the internal space of the absorption tower 21 increases. As a result, in the internal space of the absorption tower 21, for example, the absorption reaction occurs as before the decrease in absorption performance.

[C] Conclusion

As explained above, in the reactor control system 100 in this embodiment, the control part 70 includes the inverse analysis part 71 and the control signal output part 72 as in the case of the first embodiment.

Therefore, according to the reactor control system 100 in this embodiment, the reaction appropriately proceeds in the internal space of the absorption tower 21 as in the case of the first embodiment, so that an efficient operation of the reactor can be easily achieved.

**[D]** Modification example

The case where both the operations of the circulating pump P211 and the circulating pump P221 and the operation of the reboiler 24 are controlled is explained in the above embodiment, but the present invention is not limited to this. Either the operations of the circulating pump P211 and the circulating pump P221 or the operation of the reboiler 24 may be controlled.

The case where the inverse analysis part 71 executes the inverse analysis based on the measurement data SG111, the measurement data SG 212, and the measurement data SG222 is explained in the above embodiment, but the present invention is not limited to this. Both the measurement data SG 212 and the measurement data SG222 are data related to $CO_2$ (absorption substance) which has not been absorbed into the amine absorbing liquid (medium) in the absorption tower 21 as can be seen in FIG. 3. Therefore, one of the measurement data SG 212 and the measurement data SG222 may be used in the inverse analysis by the inverse analysis part 71. In other words, not all of the temperature data, pressure data, flow velocity data, and component concentration data are used, but data at two measurement points may be used in combination. For example, the inverse analysis may be executed based on the combination of the flow rate data and the composition data in the measurement data SG 212 and the temperature data and the pressure data in the measurement data SG 222.

Besides, though not illustrated, a regeneration tower heater (not illustrated) for heating the regeneration tower 22 may be further provided and the control signal output part 72 may control the operation of the regeneration tower heater (not illustrated) according to the medium performance distribution data SG71. Further, a cooler may be provided in the absorption tower 21, and a control of decreasing the temperature of the absorption tower 21 may be similarly executed using the cooler.

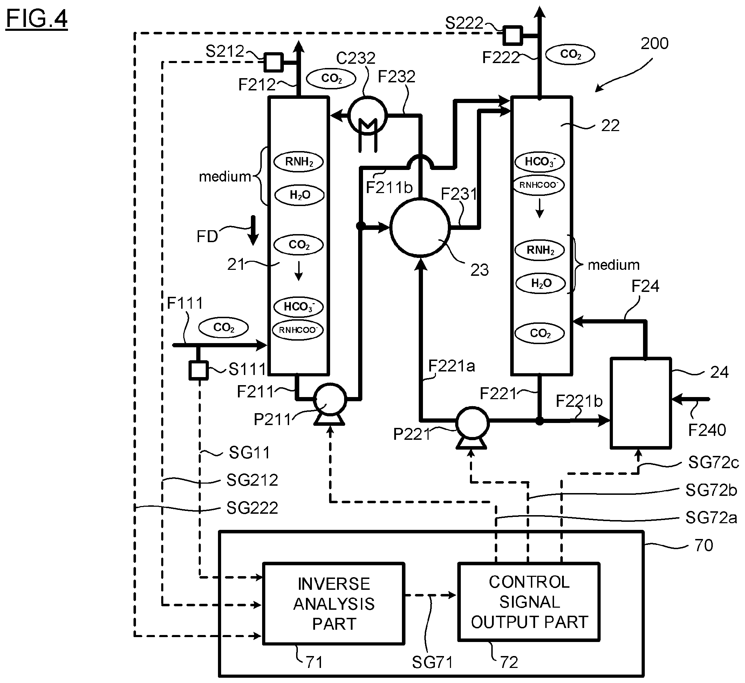

FIG. 4 is a diagram schematically illustrating an example of a reactor control system 100 in a modification example of the third embodiment. As illustrated in FIG. 4, a bypass line in which fluid F211b being part of the absorption tower discharge fluid F211 flows from the absorption tower 21 to the regeneration tower 22 while bypassing the regenerative heat exchanger 23. Here, the bypass line in which fluid F211b flows is connected to a part above a portion into which the regeneration tower introduction fluid F231 is introduced, and the flow rate is controlled by a flow rate regulating part (not illustrated) such as a valve.

Further, the control part 70 in this embodiment may further include the medium change prediction part 73 and the notification part 74 as in the case of the second embodiment (see FIG. 2A). In the case of this embodiment, the medium change prediction data SG73 found by the medium change prediction part 73 is prediction data in which the medium performance AP (absorption performance) of the amine absorbing liquid absorbing $CO_2$ in the internal space of the absorption tower 21 changes in time series. Then, the time point TC when the medium performance AP (absorption performance) decreases to be equal to or lower than the reference value in the medium change prediction data SG73 is notified to the user, for example, as the time point when the replacement of the amine absorbing liquid being a medium is necessary. Note that at the time when the medium performance AP (absorption performance) of the amine absorbing liquid decreases to be equal to or lower than the reference value, the medium performance AP (absorption performance) of the amine absorbing liquid may be returned, for example, to a set value exceeding the reference value not by the replacement of the amine absorbing liquid but by addition of amine ($RNH_2$) being a reactant to the amine absorbing liquid. Other than that, the amine absorbing liquid may be regenerated by a chemical method (by adding another solution) or an electrical method.

<Other>

While certain embodiments of the present invention have been described herein, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

EXPLANATION OF REFERENCE SIGNS

21...absorption tower, 22...regeneration tower, 23... regenerative heat exchanger, 24...reboiler, 41...steam turbine, 42...generator, 43...compressor, 44...combustion chamber, 45... gas turbine, 70...control part, 71...inverse analysis part, 72...control signal output part, 73...medium change prediction part, 74...notification part, 100...reactor control system, 410...exhaust heat recovery boiler, 412...catalyst, 413...ammonia storage tank, C232...cooler, F11...reactant introduction fluid, F111...adsorption substance introduction fluid, F12...adsorption substance introduction fluid, F21... discharge fluid, F211...absorption tower discharge fluid, F212...absorption tower discharge fluid, F221...regeneration tower discharge fluid, F221a...regeneration tower discharge fluid, F221b...reboiler introduction fluid, F222...regeneration tower discharge fluid, F231...regeneration tower introduction fluid, F232...absorption tower introduction fluid, F24...heating fluid, F240...input heat, FD...flow direction, P211...circulating pump, P221...circulating pump, P413...ammonia supply pump, S11...measuring part, S111...measuring part, S12...measuring part, S21... measuring part, S212...measuring part, S222...measuring part

**Claims**

1. A reactor control system for controlling a reactor in which a reactant introduction fluid containing a reactant and an adsorption substance introduction fluid containing an adsorption substance are introduced into an internal space containing a medium, the adsorption substance adsorbed onto the medium and the reactant react in the internal space to produce a product, and a discharge fluid containing the product, an unreacted reactant, and an unadsorbed adsorption substance is discharged from the internal space, the reactor control system comprising

   a control part configured to control a reaction occurring in the internal space of the reactor by outputting a control signal to the reactor based on reactant introduction fluid measurement data measured regarding the reactant introduction fluid, adsorption substance introduction fluid measurement data measured regarding the adsorption substance introduction fluid, and discharge fluid measurement data measured regarding the discharge fluid, wherein
   the control part
   includes an inverse analysis part configured to find, as medium performance distribution data, a medium performance distribution in which performance of the medium changes in a flow direction in which the reactant introduction fluid and the adsorption substance introduction fluid pass through the medium, by executing an inverse analysis regarding the reactant introduction fluid measurement data, the adsorption substance introduction fluid measurement data, and the discharge fluid measurement data, and
   is configured to execute output of the control signal based on the medium performance distribution data.

2. A reactor control system for controlling a reactor in which an absorption substance introduction fluid containing an absorption substance to be absorbed into a medium containing a reactant is introduced into an internal space into which the medium is introduced, a first discharge fluid containing a product produced in the internal space and an unreacted reactant is discharged from the internal space, and a second discharge fluid containing an unabsorbed absorption substance is discharged from the internal space, the reactor control system comprising

   a control part configured to control a reaction occurring in the internal space by outputting a control signal to the reactor based on adsorption substance introduction fluid measurement data measured regarding the absorption substance introduction fluid and discharge fluid measurement data measured regarding at least one of the first discharge fluid and the second discharge fluid, wherein
   the control part
   includes an inverse analysis part configured to find, as medium performance distribution data, a medium performance distribution in which performance of the medium changes in a flow direction in which the absorption substance introduction fluid flows in the internal space, by executing an inverse analysis regarding the adsorption substance introduction fluid measurement data and the discharge fluid measurement data, and
is configured to execute output of the control signal based on the medium performance distribution data.

3. The reactor control system according to claim 1 or 2, wherein
the inverse analysis part is configured to execute the inverse analysis using a model constructed regarding a relation between the reactant introduction fluid measurement data, the adsorption substance introduction fluid measurement data, and the discharge fluid measurement data, and, the medium performance distribution data.

4. The reactor control system according to claim 1 or 2, further comprising;

a medium change prediction part configured to find medium change prediction data by predicting a change in time series of the medium performance distribution, based on the medium performance distribution data found at a plurality of time points by the inverse analysis part; and
a notification part configured to find a time point when the performance of the medium becomes a state other than a predetermined state based on the medium change prediction data found by the medium change prediction part, and notify of the time point.

FIG.1A

EP 4 691 604 A2

## FIG.1B

```
        ┌──────────────┐
        │    START     │
        └──────┬───────┘
               │
    ┌──────────┴───────────────┐
    │ INPUT OF MEASUREMENT DATA │─── ST71
    └──────────┬───────────────┘
               │
    ┌──────────┴───────────────┐
    │ EXECUTION OF INVERSE      │─── ST72
    │ ANALYSIS                  │
    └──────────┬───────────────┘
               │
    ┌──────────┴───────────────┐
    │ OUTPUT OF CONTROL SIGNAL  │─── ST73
    └──────────┬───────────────┘
               │
        ┌──────┴───────┐
        │     END      │
        └──────────────┘
```

FIG.1C

EP 4 691 604 A2

EP 4 691 604 A2

FIG.1D

## FIG.2A

EP 4 691 604 A2

# FIG.2B

EP 4 691 604 A2

## FIG.2C

EP 4 691 604 A2

FIG.3

EP 4 691 604 A2

FIG.4